# EUROPÄISCHE PATENTSCHRIFT

(11) **EP 2 834 538 B1**
(45) Veröffentlichungstag und Bekanntmachung des Hinweises auf die Patenterteilung: **15.06.2016**
(21) Anmeldenummer: 13709324.1
(22) Anmeldetag: 06.03.2013
(51) Int. Cl.: F16H 57/021, F16H 57/022, F16H 57/023

(54) **GETRIEBE MIT EINEM ERSTEN UND EINEM ZWEITEN GEHÄUSETEIL**
GEARBOX WITH A FIRST AND A SECOND HOUSING PART
DISPOSITIF D'ENTRAÎNEMENT PRÉSENTANT UNE PREMIÈRE ET UNE DEUXIÈME PARTIE DE CARTER

(30) Priorität: 04.04.2012 DE 102012006790
(43) Veröffentlichungstag der Anmeldung: 11.02.2015
(73) Patentinhaber: Sew-Eurodrive GmbH & Co. KG, 76646 Bruchsal (DE)
(72) Erfinder: TEGELTIJA, Miki, 76689 Karlsdorf-Neuthardt (DE); BÜHN, Oliver, 76703 Kraichtal (DE)
(86) Internationale Anmeldenummer: PCT/EP2013/000643
(87) Internationale Veröffentlichungsnummer: WO 2013/149693

(56) Entgegenhaltungen:
- EP-A2- 0 280 776
- WO-A1-2005/111443
- DE-A1-102007 061 540

## Beschreibung

Die Erfindung betrifft ein Getriebe mit einem ersten und einem zweiten Gehäuseteil.

Es ist allgemein bekannt, dass Zwischenwellen von Getrieben über Lager in dem Getriebegehäuse gelagert sind.

**Aus der gattungsgemäßen** EP 0 280 776 A2 **ist eine Lageranordnung für eine Kegelradwelle bekannt.**

**Aus der** WO 2005/111443 A1 **ist eine Lagerung für eine Antriebsritzelwelle eines Allrad-Vorderradgetriebes bekannt.**

**Aus der** DE 10 2007 061540 A1 **ist eine Lagerbuchse für Achsantriebe bekannt.**

Der Erfindung liegt daher die Aufgabe zugrunde, Getriebe weiterzubilden, wobei die Herstellung einfach sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit einem ersten und einem zweiten Gehäuseteil sind, dass eine Zwischenwelle des Getriebes über zwei Lager in einer die Lager aufnehmenden Buchse gelagert ist,

wobei die Buchse das erste Gehäuseteil gegen das zweite Gehäuseteil zentriert.

Von Vorteil ist dabei, dass die Lager samt Zwischenwelle in die Buchse einmontierbar sind und danach die gesamte so montierte Einheit in das erste Gehäuseteil einführbar und einpressbar ist. Danach wird das zweite Gehäuseteil aufgesteckt auf die aus dem ersten Gehäuseteil teilweise herausragende Buchse. Auf diese Weise sind die beiden Gehäuseteil aneinander zentrierbar und gleichzeitig die Montage vereinfacht. Die Gehäuseteile sind in einfacher Weise als Druckguss fertigbar.

Die Buchse ist als Druckgussteil, insbesondere bei Ausführung aus Metall, oder als Spritzgussteil, insbesondere bei Ausführung aus Kunststoff, herstellbar.

Durch den symmetrischen Aufbau der Buchse ist eine Fehlmontage in einfacher Weise verhinderbar. Dabei enthält die Symmetrieebene den Schwerpunkt der Buchse und die Zwischenwellenachsrichtung ist die Normalenrichtung zur Symmetrieebene.

Bei einer vorteilhaften Ausgestaltung sind erstes und zweites Gehäuseteil schraubverbunden miteinander, wobei die Schraubverbindung außerhalb der Buchse angeordnet ist. Von Vorteil ist dabei, dass eine feste Verbindung herstellbar ist.

Bei einer vorteilhaften Ausgestaltung weist die Buchse einen äußeren Hülsenabschnitt auf, welcher an den Aufnahmebereichen der beiden Gehäuseteile anliegt. Von Vorteil ist dabei, dass eine tragfähige Struktur bei geringem Materialaufwand erreicht ist und außerdem Öffnungen für den Öldurchtritt vorhanden sind.

Bei einer vorteilhaften Ausgestaltung weist der äußere Hülsenabschnitt einen ersten axialen Abschnitt auf, der als Einführpassbereich ausgeführt ist, und einen zweiten axialen Abschnitt aufweist, der als Presspassbereich ausgeführt ist,
wobei die axiale Richtung der Zwischenwellenachse entspricht. Von Vorteil ist dabei, dass das Einführen in die Gehäuseteile erleichtert ist und der Presspassbereich insbesondere durch thermisches Aufschrumpfen tragfähig ist. Zusätzlich ist Klebstoff vorgesehen.

Bei einer vorteilhaften Ausgestaltung weist die Buchse einen inneren Hülsenabschnitt auf, der in einem ersten axialen Abschnitt ein erstes Lager der Zwischenwelle und in einem zweiten axialen Abschnitt ein zweites Lager der Zwischenwelle aufnimmt, wobei axial zwischen erstem und zweitem Abschnitt ein Stegabschnitt angeordnet ist, dessen kleinster Radialabstand kleiner ist als der kleinste Radialabstand des ersten oder zweiten Abschnitts.

Von Vorteil ist dabei, dass eine tragfähige Struktur geschaffen ist, die axial durchgehende Öffnungen aufweist.

Bei einer vorteilhaften Ausgestaltung sind der innere und der äußere Hülsenabschnitt über Tragrippen verbunden, wobei die Tragrippen in Umfangsrichtung voneinander beabstandet sind, insbesondere regelmäßig voneinander beabstandet sind. Von Vorteil ist dabei, dass axial durchgehende Öffnungen für Öldurchtritt und somit für die Schmierung der beidseitig der Buchse angeordneten Verzahnungen und Lager vorsehbar sind.

Bei einer vorteilhaften Ausgestaltung sind die Lager Kegelrollenlager, insbesondere in O-Anordnung, X-Anordnung oder Tandemanordnung. Von Vorteil ist dabei, dass einfach herstellbare Lageranordnungen verwendbar sind.

Bei einer vorteilhaften Ausgestaltung ist die Zwischenwelle mit einem ersten Verzahnungsteil drehfest verbunden oder weist eine entsprechende Verzahnung auf, so dass ein erstes axiales Lager von dem Verzahnungsteil oder dem Verzahnungsabschnitt axial begrenzt ist,
wobei ein auf der hierzu abgewandten axialen Seite der Buchse ein weiteres Verzahnungsteil mit der Zwischenwelle drehfest verbunden ist, welches das andere Lager axial begrenzt, insbesondere wobei das weitere Verzahnungsteil mittels eines Sicherungsrings axial begrenzt ist. Von Vorteil ist dabei, dass das Anstellen der Lager in einfacher Weise erreichbar ist.

Bei einer vorteilhaften Ausgestaltung ist die Zwischenwelle mit einer Kegelritzelverzahnung versehen oder drehfest verbunden und/oder die Zwischenwelle ist mit einer schrägverzahnten Stirnradverzahnung versehen oder verbunden. Von Vorteil ist dabei, dass die Zwischenwelle in einfacher Weise herstellbar ist.

Bei einer vorteilhaften Ausgestaltung weist die Kegelritzelverzahnung mit einem im zweiten Gehäuseteil über dort aufgenommene Lager gelagerten Kegelrad im Eingriff ist. Von Vorteil ist dabei, dass die Buchse vorteiligerweise einen einfachen Aufbau eines Kegelgetriebes ermöglicht.

Bei einer vorteilhaften Ausgestaltung ist das erste Gehäuseteil mit einem Motorgehäuse verbunden, wobei eine Rotorwelle über im Motorgehäuse aufgenommene Lager gelagert ist, wobei die Rotorwelle mit einem eintreibenden Verzahnungsteil des Getriebes drehfest verbunden ist, wobei das eintreibende Verzahnungsteil vom ersten Gehäuseteil radial umgeben ist. Von Vorteil ist dabei, dass das eintreibende Verzahnungsteil im Getriebe angeordnet ist und über den Motor gelagert ist.

Bei einer vorteilhaften Ausgestaltung steht das mit der Zwischenwelle drehfest verbundene Verzahnungsteil im Eingriff mit dem mit der Rotorwelle verbundenen, eintreibenden Verzahnungsteil. Von Vorteil ist dabei, dass das eintreibende Verzahnungsteil über den Elektromotor lagerbar ist.

Bei einer vorteilhaften Ausgestaltung ist die Buchse in einen Aufnahmebereich des ersten Gehäuseteils eingepresst und in einen hierzu koaxial angeordneten Aufnahmebereich des zweiten Gehäuseteils. Von Vorteil ist dabei, dass ein zentrieren mittels der Buchse ausführbar ist.

Bei einer vorteilhaften Ausgestaltung sind erstes und zweites Gehäuseteil dicht verbunden. Von Vorteil ist dabei, dass Öl im Getriebeinneren einsetzbar ist.

Bei einer vorteilhaften Ausgestaltung ist zwischen einem der Gehäuseteile und der Buchse ein ringförmiger Raumbereich zur Aufnahme von Klebstoff angeordnet,

insbesondere wobei der Raumbereich durch eine Vertiefung in der Buchse und den Aufnahmebereich des Gehäuseteils für die Buchse begrenzt ist. Von Vorteil ist dabei, dass mittels der Klebstoffverbindung eine Verdrehsicherung der Buchse zum Gehäuse erreichbar ist, obwohl die Buchse sich bei Montage vor Aushärten des Klebstoffs drehen lässt und somit ein Setzen der Lager beförderbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

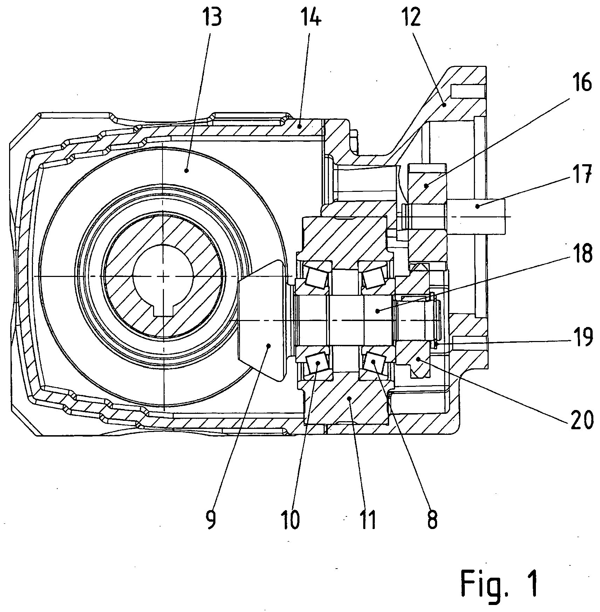

In der Figur 1 ist eine Schnittansicht durch ein erfindungsgemäßes Getriebe mit einer Buchse 11 gezeigt.

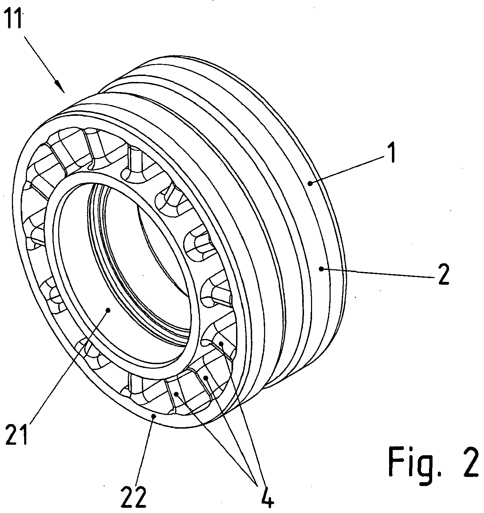

In der Figur 2 ist die Buchse 11 in Schrägansicht dargestellt.

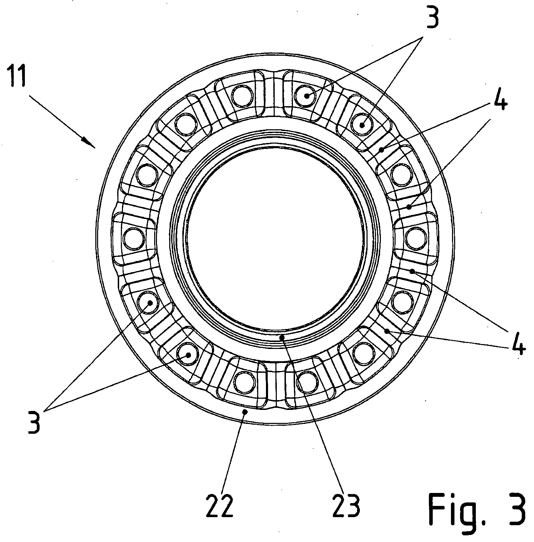

In der Figur 3 ist die Buchse 11 in Draufansicht dargestellt.

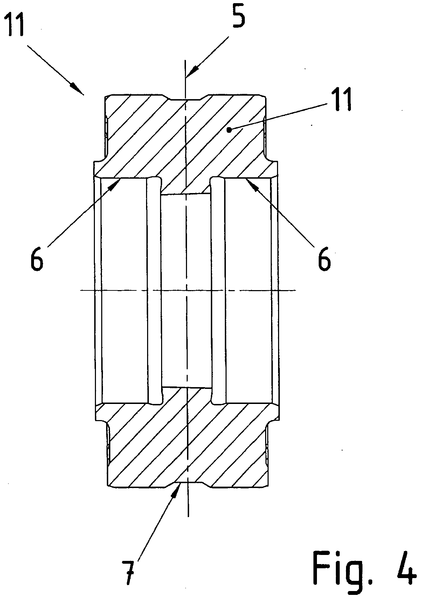

In der Figur 4 ist die Buchse 11 in Schnittansicht dargestellt.

Das Gehäuse des Getriebes weist zumindest zwei Gehäuseteile (12,14) auf, die mittels der Buchse 11 zueinander zentriert sind.

Dabei nimmt die Buchse 11 zwei Lager (8, 10) auf, über welche eine Zwischenwelle 18 gelagert ist, die an ihrem eingangsseitigen axialen Endbereich mit einem Zahnrad 20 drehfest verbunden ist, welches im Eingriff ist mit einem eintreibenden Zahnrad 16, das mit einer eintreibenden Welle 17, insbesondere ein Rotor eines antreibenden, nicht dargestellten Elektromotors, drehfest verbunden ist. Dabei ist das Zahnrad 16 mit der Welle 17 gelagert im Gehäuse der antreibenden Vorrichtung, insbesondere Elektromotor. Das Gehäuse der antreibenden Vorrichtung ist mit dem ersten Gehäuseteil 12 verbunden, wobei hier ein Zentriermittel, insbesondere ein Zentrierbund, am ersten Gehäuseteil 12 ausgeformt ist.

An seinem anderen axialen Endbereich ist die Zwischenwelle 18 mit dem Kegelritzel 9 drehfest verbunden. Alternativ ist die Zwischenwelle 18 mit dem Kegelritzel 9 einstückig ausgeführt, so dass die Verzahnung des Kegelritzels in einem Wellenabschnitt der Zwischenwelle 18 eingearbeitet ist.

Das Kegelritzel 9 ist im Eingriff mit dem Kegelrad 13, welches über Lager mit zweiten Gehäuseteil 14 oder in einem mit dem zweiten Gehäuseteil 14 verbundenen Gehäuseteil gelagert ist.

Der Innenring des ersten Lagers 10 der Buchse 11 liegt an einer Wellenstufe, insbesondere an einem Wellenbund, der Zwischenwelle 18 an.

Der Außenring des ersten Lagers 10 liegt an einer Innenstufe der Innenwandung der Buchse 11 an.

Der Außenring des zweiten Lagers 8 liegt ebenfalls an einer Innenstufe der Innenwandung der Buchse 11 an. Dabei sind die beiden genannten Innenstufen durch einen sich nach radial innen erstreckenden, an der Innenwandung der Buchse 11 angeordneten ringförmigen Abschnitt gebildet, der radial von der Zwischenwelle 18 beabstandet ist.

Der Innenring des zweiten Lagers 8 liegt an dem Zahnrad 20 an, das axial durch einen auf der vom Lager 8 abgewandten Seite des Zahnrades 20 angeordneten Sicherungsrings 19.

Somit sind die Lager (8, 10) beispielhaft als Kegelrollenlager ausführbar und axial begrenzt gehalten.

Bei zweistückiger Ausführung des Kegelritzels 9 und der Zwischenwelle 18 ist ein axiales Begrenzungsmittels zwischen Kegelritzel 9 und Zwischenwelle 18 angeordnet.

Die Buchse 11 weist an ihrer Außenseite eine Vertiefung 7 auf und ist in den zylindrischen, vorzugsweise nicht gestuften Aufnahmebereichen der Gehäuseteile (12,14) aufgenommen. Vorzugsweise werden die Aufnahmebereiche als Bohrung hergestellt.

Die Vertiefung 7 begrenzt somit mit der Wandung des Aufnahmebereichs des ersten Gehäuseteils 12 einen ringförmigen Raumbereich, in welchen Klebstoff einbringbar ist. Somit sorgt dann der Klebstoff für eine drehfeste Verbindung zwischen dem ersten Gehäuseteil 12 und der Buchse 11.

Zusätzlich weist die Buchse 11 an ihrer äußeren Oberfläche, also an der Außenfläche des äußeren Hülsenabschnitts 22, einen ersten axialen Abschnitt auf, der als Einführpassbereich 1 ausgeführt ist und das Einführen der Buchse 11 in den Aufnahmebereich erleichtert, und einen sich daran anschließenden axialen Abschnitt auf, der als Presspassbereich 2 wirksam ist, so dass eine hohe Haftreibung entsteht, auf.

Vorzugswiese wird der Aufnahmebereich des Gehäuseteils 12 auf die Buchse zusätzlich thermisch aufgeschrumpft. Hierzu wird beim Zusammenfügen ein Temperaturunterschied zwischen Buchse und Gehäuseteil 12 vorgesehen.

Ebenso weist die Buchse auch einen Einführpassbereich und einen Presspassbereich auf, die beim Verbinden mit dem zweiten Gehäuseteil 14 wirksam sind.

Die Buchse 11 weist einen inneren Hülsenabschnitt 21 und einen äußeren Hülsenabschnitt 22 auf, wobei der innere Hülsenabschnitt 21 die jeweiligen Außenringe der Lager (8, 10) aufnimmt und der äußere Hülsenabschnitt 22 die Aufnahmebereiche der Gehäuseteile (12, 14) berührt.

Im Radialabstandsbereich zwischen den beiden Hülsenabschnitten (21, 22) sind radial sich erstreckende speichenartig ausgeführte Tragrippen 4 angeordnet, so dass in Umfangsrichtung zwischen jeweils zwei nächstbenachbarten Tragrippen eine axial durchgehende Öffnung 3 vorhanden ist. Auf diese Weise ist Öl von der axial vorderen zur axial hinteren Seite der Buchse 11 hindurchführbar.

Tragrippen 4, äußerer Hülsenabschnitt 22 und innerer Hülsenabschnitt 21 sind vorzugsweise einstückig ausgeführt.

Die Buchse 11 ist vorzugsweise aus Stahl oder einem Metall wie Aluminium.

Bei einem weiteren erfindungsgemäßen Ausführungsbeispiel sind statt der gezeigten in O-Anordnung oder Tandemanordnung angeordneten Kegelrollenlager (8, 10) andere Lager verwendet, wie Kugelrollenlager.

### Bezugszeichenliste

1 Einführpassbereich
2 Presspassbereich
3 Ausnehmung, Durchgangsloch für Ölaustausch
4 Tragrippe
5 Symmetrielinie
6 Lageraufnahme
7 Vertiefung zur Bildung eines Raumbereichs für Klebeverbindung als Sicherung gegen Verdrehung
8 Lager
9 Kegelritzel
10 Lager
11 Buchse
12 erstes Gehäuseteil
13 Kegelrad
14 zweites Gehäuseteil
16 Zahnrad
17 Welle, insbesondere eintreibende Welle, insbesondere Rotor eines Elektromotors
18 Zwischenwelle
19 Sicherungsring
20 Zahnrad
21 innerer Hülsenabschnitt
22 äußerer Hülsenabschnitt

## Patentansprüche

1. Getriebe mit einem ersten und einem zweiten Gehäuseteil (12, 14),
**wobei** eine Zwischenwelle (18) des Getriebes über zwei Lager (8, 10) in einer die Lager (8, 10) aufnehmenden Buchse (11) gelagert ist,
**dadurch gekennzeichnet, dass**
die Buchse (11) das erste Gehäuseteil (12) gegen das zweite Gehäuseteil (14) zentriert, **indem die Buchse (11) in das erste Gehäuseteil (12) eingepresst ist und das zweite Gehäuseteil (14) auf die aus dem ersten Gehäuseteil (12) teilweise herausragende Buchse (11) aufgesteckt ist,**
**wobei zwischen einem der Gehäuseteile (12, 14) und der Buchse (11) ein ringförmiger Raumbereich zur Aufnahme von Klebstoff angeordnet ist,**

2. Getriebe nach Anspruch 1,
**dadurch gekennzeichnet, dass**
erstes und zweites Gehäuseteil (12, 14) schraubverbunden miteinander sind, wobei die Schraubverbindung außerhalb der Buchse (11) angeordnet ist.

3. Getriebe nach mindestens einem der vorangegangenen Ansprüche,
**dadurch gekennzeichnet, dass**
die Buchse (11) einen äußeren Hülsenabschnitt (22) aufweist, welcher an Aufnahmebereichen der beiden Gehäuseteile anliegt.

4. Getriebe nach mindestens einem der vorangegangenen Ansprüche,
**dadurch gekennzeichnet, dass**
der äußere Hülsenabschnitt (22) einen ersten axialen Abschnitt, aufweist, der als Einführpassbereich (1) ausgeführt ist, und einen zweiten axialen Abschnitt aufweist, der als Presspassbereich (2) ausgeführt ist,
wobei die axiale Richtung der Zwischenwellenachse entspricht.

5. Getriebe nach mindestens einem der vorangegangenen Ansprüche,
**dadurch gekennzeichnet, dass**
die Buchse (11) einen inneren Hülsenabschnitt (21) aufweist, der in einem ersten axialen Abschnitt ein erstes Lager (8) der Zwischenwelle (18) und in einem zweiten axialen Abschnitt ein zweites Lager (10) der Zwischenwelle (18) aufnimmt, wobei axial zwischen erstem und zweitem Abschnitt ein Stegabschnitt angeordnet ist, dessen kleinster Radialabstand kleiner ist als der kleinste Radialabstand des ersten oder zweiten Abschnitts.

6. Getriebe nach mindestens einem der vorangegangenen Ansprüche,
**dadurch gekennzeichnet, dass**
der innere und der äußere Hülsenabschnitt (21, 22) über Tragrippen (4) verbunden sind, wobei die Tragrippen (4) in Umfangsrichtung voneinander beabstandet sind, insbesondere regelmäßig voneinander beabstandet sind.

7. Getriebe nach mindestens einem der vorangegangenen Ansprüche,
**dadurch gekennzeichnet, dass**
die Lager (8, 10) Kegelrollenlager, insbesondere in O-Anordnung, X-Anordnung oder Tandemanordnung, sind.

8. Getriebe nach mindestens einem der vorangegangenen Ansprüche,
**dadurch gekennzeichnet, dass**
die Zwischenwelle (18) mit einem ersten Verzahnungsteil drehfest verbunden ist oder eine entsprechende Verzahnung aufweist, so dass ein erstes axiales Lager (8) von dem Verzahnungsteil oder dem Verzahnungsabschnitt axial begrenzt ist,
wobei ein auf der hierzu abgewandten axialen Seite der Buchse (11) ein weiteres Verzahnungsteil mit der Zwischenwelle (18) drehfest verbunden ist, welches das andere Lager (10) axial begrenzt, insbesondere wobei das weitere Verzahnungsteil mittels eines Sicherungsrings (19) axial begrenzt ist.

9. Getriebe nach mindestens einem der vorangegangenen Ansprüche,
**dadurch gekennzeichnet, dass**
die Zwischenwelle (18) mit einer Kegelritzelverzahnung versehen oder drehfest verbunden ist und/oder die Zwischenwelle (18) mit einer schrägverzahnten Stirnradverzahnung versehen oder verbunden ist.

10. Getriebe nach mindestens einem der vorangegangenen Ansprüche,
**dadurch gekennzeichnet, dass**
die Kegelritzelverzahnung mit einem im zweiten Gehäuseteil (14) über dort aufgenommene Lager (8, 10) gelagerten Kegelrad im Eingriff ist.

11. Getriebe nach mindestens einem der vorangegangenen Ansprüche,
**dadurch gekennzeichnet, dass**
das erste Gehäuseteil (12) mit einem Motorgehäuse verbunden ist,
wobei eine Rotorwelle über im Motorgehäuse aufgenommene Lager (8, 10) gelagert ist, wobei die Rotorwelle mit einem eintreibenden Verzahnungsteil des Getriebes drehfest verbunden ist, wobei das eintreibende Verzahnungsteil vom ersten Gehäuseteil (12) radial umgeben ist.

12. Getriebe nach mindestens einem der vorangegangenen Ansprüche,
**dadurch gekennzeichnet, dass**
das mit der Zwischenwelle (18) drehfest verbundene Verzahnungsteil im Eingriff steht mit dem mit der Rotorwelle verbundenen, eintreibenden Verzahnungsteil.

13. Getriebe nach mindestens einem der vorangegangenen Ansprüche,
**dadurch gekennzeichnet, dass**
die Buchse (11) in einen Aufnahmebereich des ersten Gehäuseteils (12) eingepresst ist und in einen hierzu koaxial angeordneten Aufnahmebereich des zweiten Gehäuseteils (14).

14. Getriebe nach mindestens einem der vorangegangenen Ansprüche,
**dadurch gekennzeichnet, dass**
erstes und zweites Gehäuseteil (12, 14) dicht verbunden sind.

15. Getriebe nach mindestens einem der vorangegangenen Ansprüche,
**dadurch gekennzeichnet, dass**
**der Raumbereich durch eine Vertiefung (7) in der Buchse (11) und den Aufnahmebereich des Gehäuseteils (12,14) für die Buchse (11) begrenzt ist.**

## Claims

1. Gear unit having a first and a second housing part (12, 14),
an intermediate shaft (18) of the gear unit being mounted via two bearings (8, 10) in a bushing (11) accommodating the bearings (8, 10),
**characterised in that**
the bushing (11) centres the first housing part (12) against the second housing part (14) by the bushing (11) being pressed into the first housing part (12), and the second housing part (14) is slipped onto the bushing (11) projecting at least partially from the first housing part (12),
an annular spatial area for receiving adhesive being located between one of the housing parts (12, 14) and the bushing (11).

2. Gear unit according to claim 1,
**characterised in that**
the first and second housing parts (12, 14) are screw-connected to each other, the screw connection being located outside of the bushing (11).

3. Gear unit according to at least one of the preceding claims,
**characterised in that**
the bushing (11) has an outer sleeve section (22) which abuts against accommodation areas of the two housing parts.

4. Gear unit according to at least one of the preceding claims,
**characterised in that**
the outer sleeve section (22) has a first axial section which is implemented as an insertion-fit area (1), and has a second axial section which is implemented as an interference-fit area (2),
the axial direction corresponding to the axis of the intermediate shaft.

5. Gear unit according to at least one of the preceding claims,
**characterised in that**
the bushing (11) has an inner sleeve section (21) which accommodates a first bearing (8) of the intermediate shaft (18) in a first axial section, and a second bearing (10) of the intermediate shaft (18) in a second axial section, a crosspiece segment being disposed axially between the first and second axial sections whose smallest radial distance is less than the smallest radial distance of the first or second section.

6. Gear unit according to at least one of the preceding claims,
**characterised in that**
the inner and outer sleeve sections (21, 22) are joined via support ribs (4), the support ribs (4) being set apart from each other, in particular being evenly spaced from each other, in the circumferential direction.

7. Gear unit according to at least one of the preceding claims,
**characterised in that**
the bearings (8, 10) are tapered roller bearings, in particular in O-configuration, X-configuration or tandem configuration.

8. Gear unit according to at least one of the preceding claims,
**characterised in that**
the intermediate shaft (18) is joined in rotatably fixed manner to a first toothing part or has a corresponding toothing, so that a first axial bearing (8) is bounded axially by the toothing part or the toothing section,
on the axial side of the bushing (11) opposite from this, a further toothing part being joined in rotatably fixed manner to the intermediate shaft (18) and bounding the other bearing (10) axially, in particular the further toothing part being bounded axially by a retaining ring (19).

9. Gear unit according to at least one of the preceding claims,
**characterised in that**
the intermediate shaft (18) is provided with or joined in rotatably fixed manner to a bevel-pinion toothing and/or
the intermediate shaft (18) is provided with or joined to a helical cylindrical-gear toothing.

10. Gear unit according to at least one of the preceding claims,
**characterised in that**
the bevel-pinion toothing is in mesh with a bevel-gear wheel mounted in the second housing part (14) via bearings (8, 10) accommodated there.

11. Gear unit according to at least one of the preceding claims,
**characterised in that**
the first housing part (12) is joined to a motor housing,
a rotor shaft being mounted via bearings (8, 10) accommodated in the motor housing, the rotor shaft being joined in rotatably fixed manner to an input toothing part of the gear unit, the input toothing part being surrounded radially by the first housing part (12).

12. Gear unit according to at least one of the preceding claims,
**characterised in that**
the toothing part joined in rotatably fixed manner to the intermediate shaft (18) is in mesh with the input toothing part joined to the rotor shaft.

13. Gear unit according to at least one of the preceding claims,
**characterised in that**
the bushing (11) is pressed into an accommodation area of the first housing part (12) and into an accommodation area, situated coaxially relative to it, of the second housing part (14).

14. Gear unit according to at least one of the preceding claims,
**characterised in that**
the first and second housing parts (12, 14) are imperviously joined.

15. Gear unit according to at least one of the preceding claims,
**characterised in that**
the spatial area is delimited by a depression (7) in the bushing (11) and by the accommodation area of the housing part (12, 14) for the bushing (11).

## Revendications

1. Transmission comprenant des première et seconde parties (12, 14) de carter, un arbre intermédiaire (18) de ladite transmission étant monté, au moyen de deux paliers (8, 10), dans une douille (11) recevant lesdits paliers (8, 10),
**caractérisée par le fait que**
la douille (11) centre la première partie (12) du carter, vis-à-vis de la seconde partie (14) dudit carter, par emmanchement à force de ladite douille (11) dans ladite première partie (12) du carter, et par emboîtement de ladite seconde partie (14) du carter sur ladite douille (11) faisant partiellement saillie au-delà de ladite première partie (12) du carter,
un espace interstitiel annulaire étant réservé, entre ladite douille (11) et l'une desdites parties (12, 14) du carter, en vue de recevoir une substance adhésive.

2. Transmission selon la revendication 1,
**caractérisée par le fait que**
les première et seconde parties (12, 14) du carter sont reliées l'une à l'autre par vissage, la solidarisation vissée étant située à l'extérieur de la douille (11).

3. Transmission selon au moins l'une des revendications précédentes,
**caractérisée par le fait que**
la douille (11) présente une partie extérieure (22) disposée en applique contre des zones réceptrices des deux parties du carter.

4. Transmission selon au moins l'une des revendications précédentes,
**caractérisée par le fait que**
la partie extérieure (22) de la douille comprend une première région axiale réalisée en tant que zone (1) d'ajustement à l'insertion, et une seconde région axiale réalisée en tant que zone (2) d'ajustement serré,
sachant que la direction axiale correspond à l'axe de l'arbre intermédiaire.

5. Transmission selon au moins l'une des revendications précédentes,
**caractérisée par le fait que**
la douille (11) présente une partie intérieure (21) recevant un premier palier (8) de l'arbre intermédiaire (18) dans une première région axiale, et un second palier (10) dudit arbre intermédiaire (18) dans une seconde région axiale, une zone de membrure, dont l'espacement radial minimal est inférieur à l'espacement radial minimal de ladite première ou seconde région, étant interposée axialement entre lesdites première et seconde régions.

6. Transmission selon au moins l'une des revendications précédentes,
**caractérisée par le fait que**
les parties intérieure et extérieure (21, 22) de la douille sont reliées par l'intermédiaire de nervures de support (4),
lesdites nervures de support (4) étant distantes les unes des autres dans le sens périphérique, notamment agencées avec espacements mutuels réguliers.

7. Transmission selon au moins l'une des revendications précédentes,
**caractérisée par le fait que**
les paliers (8, 10) sont des roulements à rouleaux coniques notamment agencés avec disposition en O, disposition en X ou disposition en tandem.

8. Transmission selon au moins l'une des revendications précédentes,
**caractérisée par le fait que**
l'arbre intermédiaire (18) est assujetti en rotation à une première partie dentée, ou comporte une denture correspondante, de sorte qu'un premier palier axial (8) est délimité axialement par ladite partie dentée, ou par la région dentée,
une partie dentée supplémentaire, assujettie en rotation audit arbre intermédiaire (18) sur le côté axial de la douille (11) qui est tourné à l'opposé, délimitant alors l'autre palier (10) dans le sens axial, sachant notamment que ladite partie dentée supplémentaire est délimitée, dans le sens axial, au moyen d'une bague d'arrêt (19).

9. Transmission selon au moins l'une des revendications précédentes,
**caractérisée par le fait que**
l'arbre intermédiaire (18) est pourvu d'une denture à pignon conique, ou est assujetti à cette dernière en rotation, et/ou ledit arbre intermédiaire (18) est muni d'une denture oblique à pignon droit, ou est relié à cette dernière.

10. Transmission selon au moins l'une des revendications précédentes,
**caractérisée par le fait que**
la denture à pignon conique est en prise avec une roue conique montée, dans la seconde partie (14) du carter, par l'intermédiaire de paliers (8, 10) logés dans ladite partie.

11. Transmission selon au moins l'une des revendications précédentes,
**caractérisée par le fait que**
la première partie (12) du carter est reliée à un carter de moteur,
un arbre rotorique étant monté par l'intermédiaire de paliers (8, 10) logés dans ledit carter du moteur,
ledit arbre rotorique étant assujetti en rotation à une partie dentée menante de ladite transmission, laquelle partie dentée menante est entourée, dans le sens radial, par ladite première partie (12) du carter.

12. Transmission selon au moins l'une des revendications précédentes,
**caractérisée par le fait que**
la partie dentée, assujettie en rotation à l'arbre intermédiaire (18), est en prise avec la partie dentée menante qui est reliée à l'arbre rotorique.

13. Transmission selon au moins l'une des revendications précédentes,
**caractérisée par le fait que**
la douille (11) est emmanchée à force dans une zone réceptrice de la première partie (12) du carter et dans une zone réceptrice de la seconde partie (14) dudit carter, disposée coaxialement à la zone précitée.

14. Transmission selon au moins l'une des revendications précédentes,
**caractérisée par le fait que**
les première et seconde parties (12, 14) du carter sont reliées de manière étanche.

15. Transmission selon au moins l'une des revendications précédentes,
**caractérisée par le fait que**
l'espace interstitiel est délimité par un renfoncement (7) façonné dans la douille (11), et par la zone réceptrice de la partie (12, 14) du carter qui est dédiée à ladite douille (11).
